# EUROPEAN PATENT APPLICATION

(11) **EP 2 001 008 A2**
(43) Date of publication of application: **10.12.2008**
(21) Application number: 07739811.3
(22) Date of filing: 27.03.2007
(51) Int. Cl.: G09G 3/28, G09G 3/20, G09G 5/00, G09G 5/36

(54) **METHOD AND DEVICE FOR DISPLAYING INFORMATION CODE**

(30) Priority: 27.03.2006 JP 2006084374
(71) Applicant: Pioneer Corporation, Tokyo 153-8654 (JP)
(72) Inventor: NOHARA, Manabu, Tsurugashima-shi, Saitama 350-2288 (JP); AKIYAMA, Toru, Tsurugashima-shi, Saitama 350-2288 (JP); AKIMOTO, Takayuki, Tsurugashima-shi, Saitama 350-2288 (JP); IWAI, Tomoaki, Tsurugashima-shi, Saitama 350-2288 (JP); SOGA, Yusuke, Tsurugashima-shi, Saitama 350-2288 (JP)
(74) Representative: Fink Numrich
(86) International application number: PCT/JP2007/056373
(87) International publication number: WO 2007/119523

(57) **Abstract**

An object is to provide a display method and device for displaying an information code, in which an information code can be displayed on a display without affecting the image being displayed. A one subfield among N subfields is used as a subfield for displaying an information code as a two-dimensional code, and the other subfields are used as subfields for displaying a primary image, in a process in which intermediate brightness is displayed using the N subfields for each unit display interval.

## Description

### TECHNICAL FIELD

The present invention relates to a method and device for displaying an information code on a display.

### BACKGROUND ART

Barcodes as one-dimensional codes, or QR (Quick Response) codes as two-dimensional codes, and other information codes are in current use. Also, systems have recently been proposed (e.g., see FIG. 1 of Patent Document 1) in which information data is converted to a QR code and displayed on a mobile phone or another display, and the QR code displayed on the display is captured as an image, whereby the information data is acquired.

However, these systems have a problem that a portion of a desired image cannot be viewed when an information code such as a QR code is displayed on a display while the desired image is being displayed on the entire display.
Patent Document 1: Japanese Patent Kokai No. 2002-109421

### DISCLOSURE OF THE INVENTION

### PROBLEMS TO BE SOLVED BY THE INVENTION

The present invention provides a method and device for displaying an information code in which an information code in an image can be superimposed and displayed without affecting the display image.

### MEANS USED TO SOLVE THE ABOVE-MENTIONED PROBLEMS

The method for displaying an information code according to the present invention is a method for displaying on a display an information code together with an image based on a primary image signal, the method comprising executing an addressing stage for setting each pixel cell of the display to one mode from among an on-mode and an off-mode in each of N (where N is an integer of 2 or higher) subfields for each unit display interval, and a sustaining stage for causing only the pixel cells set to the on-mode to emit light during a light emission interval assigned to the subfield; setting each of the pixel cells to one mode from among the on-mode and the off-mode in accordance with the information code in the addressing stage of one subfield among the N subfields; and setting each of the pixel cells to one mode from among the on-mode and to the-off-mode in accordance with the primary image signal in the addressing stage of each of the subfields except for the one subfield among the N subfields.

The display device according to the present invention is a display device for displaying on a display an information code together with an image based on a primary image signal, the device comprising address means for setting each pixel cell of the display to one mode from among an on-mode and an off-mode in each of N (where N is an integer of 2 or higher) subfields for each unit display interval; and sustain means for causing only the pixel cells set to the on-mode in each of the N subfields to emit light during a light emission interval assigned to the subfield; wherein the address means sets each of the pixel cells to one mode from among the on-mode and the off-mode in accordance with the information code in one subfield among the N subfields, and sets each of the pixel cells to one mode from among the on-mode and the-off-mode in accordance with the primary image signal in each of the subfields except for the one subfield among the N subfields.

### Effect of the Invention

An information code such as a two-dimensional code can be superimposed and displayed in an invisible state in the primary image that corresponds to the input image signal.

### BRIEF DESCRIPTION OF THE DRAWINGS

FIG. 1 is a diagram showing a schematic configuration of an electronic blackboard based on the present invention;
FIG. 2 is a diagram showing a portion of an array of pixels P and pixel blocks PB in the PDP 100 shown in FIG. 1;
FIG. 3 is a diagram showing an example of a light emission drive sequence when the PDP 100 is driven;
FIG. 4 is a diagram showing a light emission pattern when the primary image display drive stage (subfields SF1 to SF8) is executed in accordance with the light emission drive sequence shown in FIG. 3;
FIG. 5 is a diagram showing an example of the blackboard image displayed by the PDP 100;
FIG. 6 is a view showing the internal configuration of the electronic chalk 9 shown in FIG. 1;
FIG. 7 is a diagram showing an example of the internal configuration of the frame synchronization detection circuit 93 shown in FIG. 6;
FIG. 8 is a diagram showing another example of the light emission drive sequence when the PDP 100 is driven;
FIG. 9 is a diagram showing the light emission pattern for the case in which the primary image display drive stage (subfields SF1 to SF8) is carried out in accordance with the light emission drive sequence shown in FIG. 8;
FIG. 10 has diagrams showing the decay characteristics when light is emitted by the blue pixel cell P_{B}, the decay characteristics when light is emitted by pixel cell P of another color, and the decay characteristics of infrared light emitted when the pixel cell P is electrically discharged;
FIG. 11 is a diagram showing another configuration of the electronic blackboard;
FIG. 12 is a diagram showing the configuration of an information delivery system; and
FIG. 13 is a diagram showing images A to C displayed on the display device shown in FIG. 12, and an area of the pixel blocks PB in which URL information related to the images is displayed as a two-dimensional code.
   - 3, 14: SF pixel drive data generator
   - 4: Drive controller
   - 5: Address driver
   - 7, 16: Two-dimensional code converter
   - 9: Electronic chalk
   - 12: Terminal device
   - 19: Mobile phone having a camera
   - 91: Image sensor
   - 100: Plasma display panel

### BEST MODE FOR CARRYING OUT THE INVENTION

When intermediate brightness is displayed by N subfields in each unit display interval, one subfield among the N subfields is used as a subfield for displaying an information code such as one-dimensional code or two-dimensional code, and other subfields are used as subfields for displaying a primary image. In this case, the light emission interval assigned to the subfield for displaying an information code such as that described above is the shortest interval among the light emission intervals assigned to each of the N subfields. Furthermore, only the pixel cells for emitting blue light are used for emitting light in the subfield for displaying the information code, and the pixel cells for emitting light of another color (red, green) are set in an off state.

### Embodiment 1

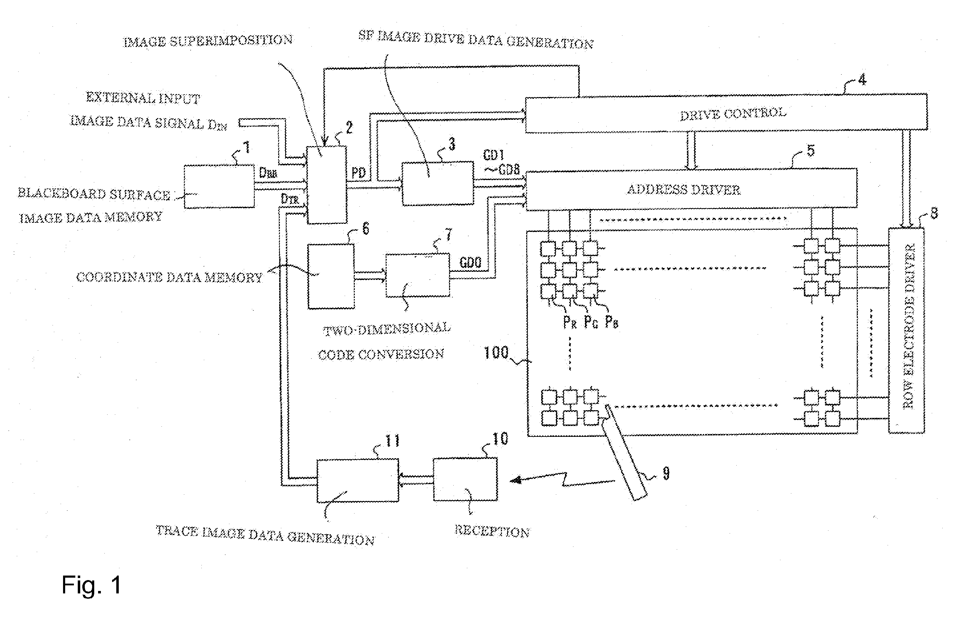

FIG. 1 is a diagram showing a configuration of an electronic blackboard in which the present invention has been adopted, and in which a movement trajectory is displayed directly on the screen when the user has moved the distal end of an electronic chalk (described later) while keeping the distal end in contact with the screen of a plasma display panel.

In FIG. 1, a plasma display panel 100 (hereinafter referred to as PDP 100) as an electronic blackboard unit is provided with a transparent front surface substrate (not shown) for carrying the blackboard surface, and a back surface substrate (not shown). A discharge space in which a discharge gas is sealed is present between the front surface substrate and the back surface substrate. A plurality of row electrodes extending in the horizontal direction (lateral direction) of each of the display surfaces is formed on the front surface substrate. A plurality of column electrodes extending in the vertical direction (perpendicular direction) of the display surface is formed on the back surface substrate. Pixel cells are formed in the intersection portions (including the discharge spaces) between the row electrodes and the column electrodes. As shown in FIG. 1, the pixel cells are composed of three types: pixel cells P_{R} for emitting red light, pixel cells P_{G} for emitting green light, and pixel cells P_{B} for emitting blue light.

Blackboard surface image data representing the blackboard surface (e.g., uniformly black) to be displayed over the entire screen of the PDP 100 is stored in advance in a blackboard surface image data memory 1. In the blackboard surface image data memory 1, the blackboard surface image data is sequentially read, and the read data is fed as blackboard surface image data D_{BB} to an image overlay circuit 2.

The image overlay circuit 2 generates pixel data PD for expressing, for each of the pixel cells P, an image in which there are superimposed a blackboard surface image expressed by the blackboard surface image data D_{BB}, an image expressed by an external input image data signal D_{IN}, and an image expressed by a trace image data signal D_{TR} (described later), and supplying the data to an SF pixel drive data generator 3 and a drive controller 4. The image overlay circuit 2 supplies the SF pixel drive data generator 3 and the drive controller 4 with the image data PD for expressing, for each of the pixel cells P, an image in which an image expressed by the external input image data signal D_{IN} and an image expressed by the trace image data signal D_{TR} are superimposed in the case that a blackboard display cancel signal is supplied from the drive controller 4 (described later).

The SF pixel drive data generator 3 generates the pixel drive data GD1 to GD8 designed to set each pixel cell P in the subfields SF1 to SF8 (described later) to an on-mode state or an off-mode state in accordance with the brightness level expressed by the pixel data PD for each pixel data PD, and supplies the data to an address driver 5.

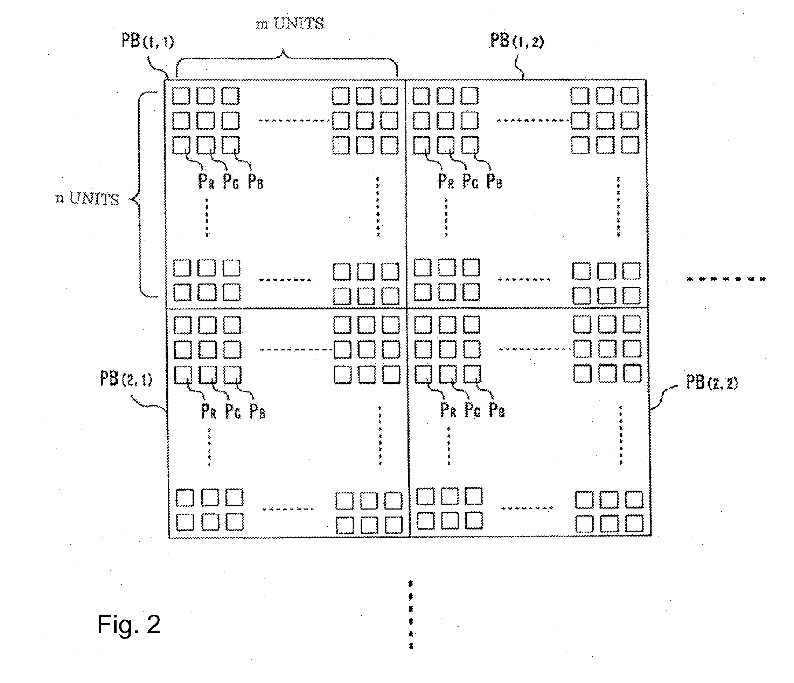

Coordinate data for expressing a coordinate position on the screen of the PDP 100 in which the pixel blocks are positioned is stored in advance in the coordinate data memory 6 for each pixel block composed of a plurality of adjacent pixel cells P. For example, coordinate data for expressing the coordinate position on the screen of the PDP 100 in the pixel blocks PB is associated and stored in the coordinate data memory 6 for each of the pixel blocks PB (the area enclosed by a bold frame) composed of n rows × m columns of pixel cells P as shown in FIG. 2. In the coordinate data memory 6, the coordinate data is read, and the read data is fed to a two-dimensional code converter 7.

The two-dimensional code converter 7 first converts the coordinate data that corresponds to each of the pixel blocks PB to (n × m) bits of two-dimensional code. The two-dimensional code converter 7 then associates the bits of the two-dimensional code with the (n × m) pixel cells P inside the pixel blocks PB, and supplies the bits correlated with each of the pixel cells P to the address driver 5 as pixel drive data GD0 that corresponds to the pixel cells P.

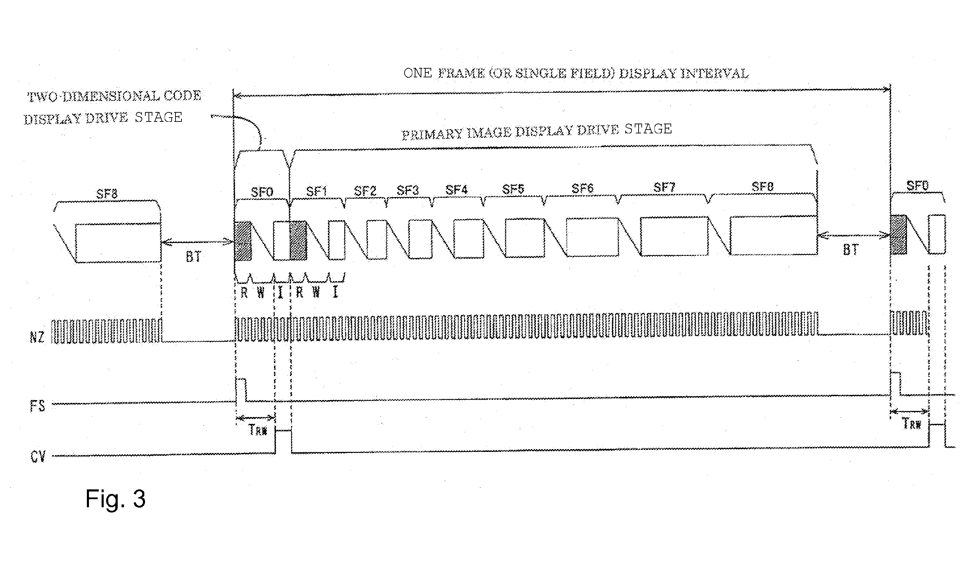

The drive controller 4 sequentially executes a two-dimensional code display drive stage and a primary image display drive stage in the display interval of one frame (or one field) on the basis of the light emission drive sequence in the manner shown in FIG. 3 based on the subfield method. In the primary image display drive stage, the drive controller 4 sequentially executes an addressing stage W and a sustaining stage I in each of the eight subfields SF1 to SF8 in the manner shown in FIG. 3. The drive controller 4 executes a reset stage R prior to the addressing stage W solely for the subfield SF1. Also, for the two-dimensional code display drive stage, the drive controller 4 sequentially executes the reset stage R, the addressing stage W, and the sustaining stage I in the subfield SF0 in the manner shown in FIG. 3. A blanking interval BT having a predetermined interval length is provided after the primary image display drive stage.

The drive controller 4 generates various drive signals for driving the PDP 100 in the manner described below by executing the reset stage R, the addressing stage W, and the sustaining stage I, and feeds the signals to the address driver 5 and a row electrode driver 8.

The row electrode driver 8 applies a reset pulse to all of the row electrodes PDP 100 in accordance with the execution of the reset stage R in order to initialize the state of all of the pixel cells P in the PDP 100 to an on-mode state.

Next, in accordance with the execution of the addressing stage W, the address driver 5 generates a pixel data pulse whose voltage corresponds to the pixel drive data GD according to the subfield SF to which the addressing stage W belongs. In other words, the address driver 5, for example, generates a pixel data pulse that corresponds to the pixel driver data GD1 in the addressing stage W of the subfield SF1, and generates a pixel data pulse that corresponds to the pixel driver data GD2 in the addressing stage W of the subfield SF2. At this point, the address driver 5, for example, generates a high-voltage pixel data pulse when pixel drive data GD for indicating that the pixel cell P is to be set in the on-mode state has been supplied, and generates a low-voltage pixel data pulse when pixel drive data GD for indicating an off-mode state setting has been supplied.

In this interval, the row electrode driver 8 sequentially applies a scan pulse to each of the row electrodes of the PDP 100 in synchronization with the application timing of the pixel data pulse groups in increments of one display line. This operation sets each of the pixel cells P for one display line that belongs to the row electrodes to which the scan pulse has been applied to a state (on-mode or off-mode) that corresponds to the pixel data pulse.

Next, in accordance with the execution of the sustaining stage I, the row electrode driver 8 applies a sustain pulse in which only the pixel cells P in an on-mode state are to be repeatedly discharged and made to emit light. The pulse is applied to all of the row electrodes of the PDP 100 during the light emission interval assigned to the subfield SF to which the sustaining stage I belongs. In the embodiment shown in FIG. 3, a minimum number of sustain pulses is assigned to the subfield SF0 in the shortest light emission interval.

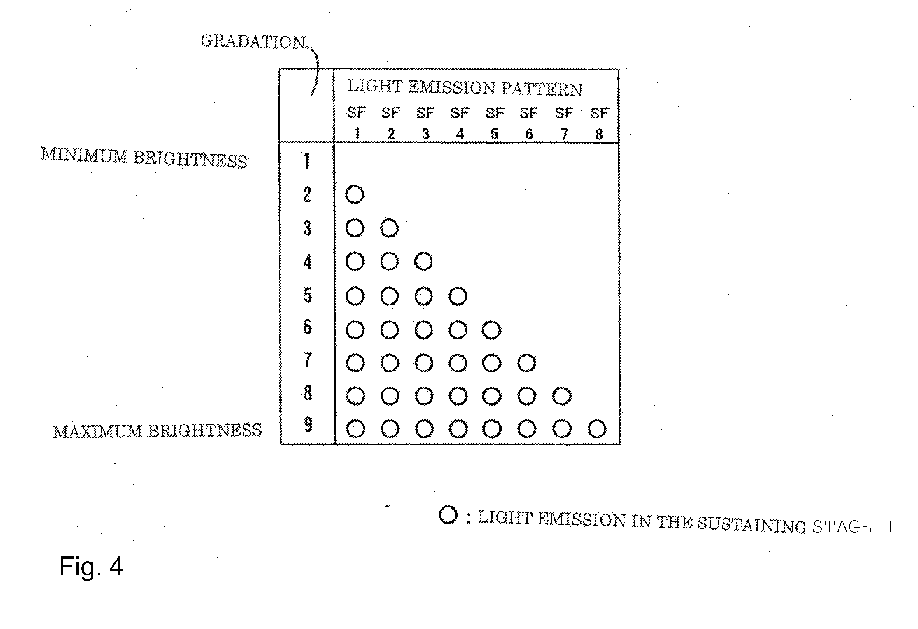

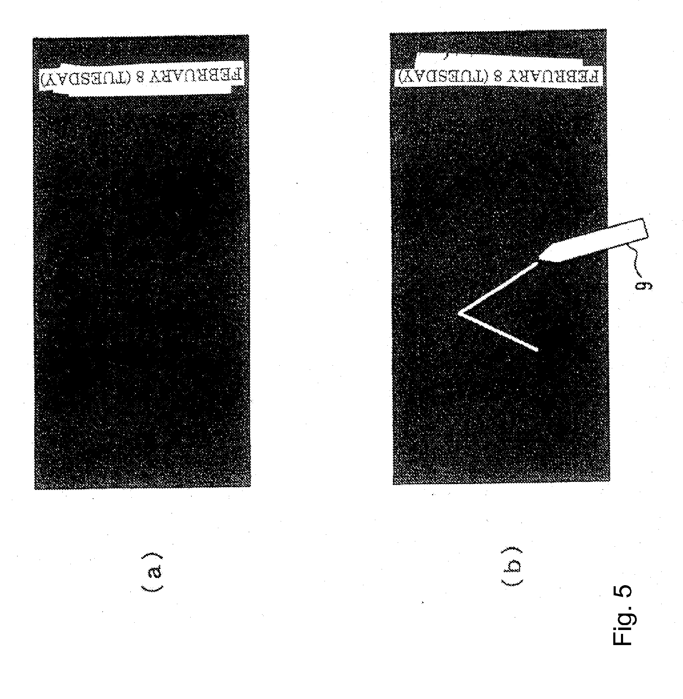

Here, the pixel cells P emit light in the sustaining stage I of each of the subfields SF (indicated by white circles) that continue from the subfield SF1 in the manner shown in FIG. 4 in accordance with the pixel drive data GD1 to GD8 based on the pixel data PD when the primary image display drive stage (subfields SF1 to SF8) is executed in the manner shown in FIG. 3. In other words, light is emitted by the pixel cells P in any one of the nine light emission patterns shown in FIG. 4 in accordance with the brightness level expressed by the pixel data PD. At this point, an intermediate brightness that corresponds to the total light emission interval in one frame display interval is visually perceived. In other words, the brightness level indicated by the pixel data PD is represented in nine gradations by using nine light emission patterns, as shown in FIG. 4. In actuality, the brightness level is expressed in multiple gradations using dithering or error diffusion. The image representing the blackboard surface as shown in FIG.5(a) is displayed on the entire surface of the PDP 100 in accordance with the pixel data PD generated based on the blackboard surface image data D_{BB} that represents the blackboard surface (e.g., uniformly black).

On the other hand, executing the two-dimensional code display drive stage (subfield SF0) causes light to be emitted from each of the pixel cells P in the sustaining stage I of the subfield SF0 in accordance with the pixel drive data GD0 based on the coordinate data, as shown in FIG. 3. In other words, on- and off-patterns based on the two-dimensional information code for representing the coordinate position of each of the pixel blocks PB as shown in FIG. 2 are formed in the coordinate positions of the pixel blocks PB. In FIG. 2, for example, light is emitted in an on- and off-pattern that expresses the first row and first column as the location of each of the (n × m) number of pixel cells P that belong to the pixel block PB(_{1,1}) positioned in the first row and first column within the PDP 100 screen. Also in FIG. 2, light is emitted in an on- and off-pattern that expresses the second row and first column as the location of each of the (n × m) number of pixel cells P that belong to the pixel block PB(_{2,1}) positioned in the second row and first column. The light emission interval assigned to the sustaining stage I of the subfield SF0 in the manner described above is set to an interval that is sufficiently short so that the on- and off-pattern based on the two-dimensional information code cannot be visually perceived. Also, the blanking interval BT shown in FIG. 3 is present immediately prior to the subfield SF0. The effect of afterglow in the subfield SF8 is eliminated when light discharged in the subfield SF0 is taken in by the electronic chalk below.

Electronic chalk 9 extracts the on- and off-pattern based on the two-dimensional information code from the captured image signal obtained by capturing the image on the screen of the PDP 100 in pixel block PB units in the manner shown in FIG. 2, and a coordinate signal for expressing the coordinate position that corresponds to the on- and off-pattern is wirelessly transmitted.

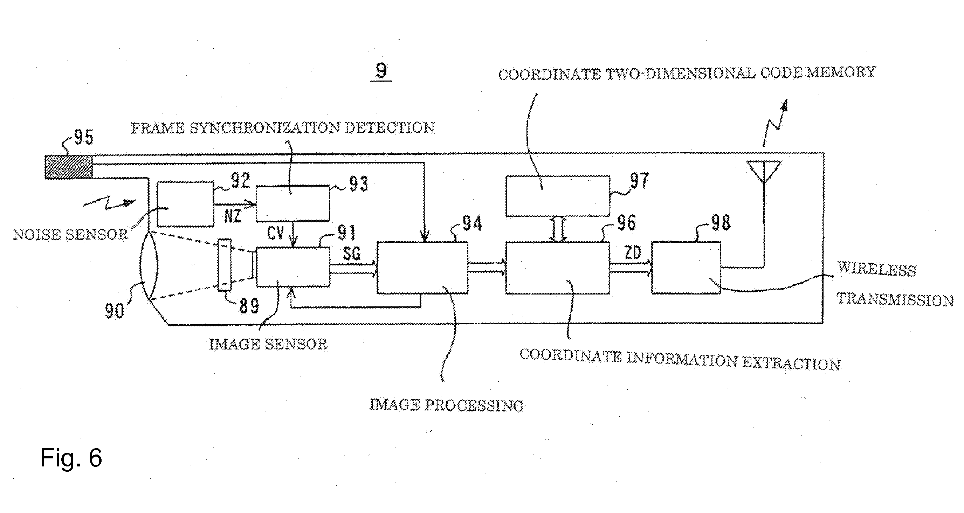

FIG. 6 is a view showing an example of the internal configuration of the electronic chalk 9.

In FIG. 6, an object lens 90 takes in the display light irradiated from the screen of the PDP 100 in area units of the pixel blocks PB, and guides the collected light to an image sensor 91 via an optical filter 89 for cutting off the red and green components. A noise sensor 92 generates a pulse-shaped noise detection signal NZ, which is a logical level 1, upon detection of noise, i.e., a discharge of infrared rays, UV rays, or electromagnetic waves, discharged from the screen of the PDP 100 in accompaniment with an electrical discharge generated in each pixel cell P in the PDP 100; and the signal is fed to the frame synchronization detection circuit 93. In this case, a pulse-shaped noise detection signal NZ, which is a logical level 1, is generated as shown in FIG. 3 each time a discharge occurs. This is because various discharges occur during the interval in which the subfields SF0 to SF8 are executed in the display interval of one frame (or one field). However, since a discharge does not occur in the blanking interval BT after completion of the subfield SF8, the noise detection signal NZ is a logical level 0 during this interval, as shown in FIG. 3. The frame synchronization detection circuit 93 generates an image reception signal CV, which is a logical level 1 during the interval that the sustaining stage I of the subfield SF0 shown in FIG. 3 is being executed and is a logical level 0 during other intervals, and the signal is fed to the image sensor 91.

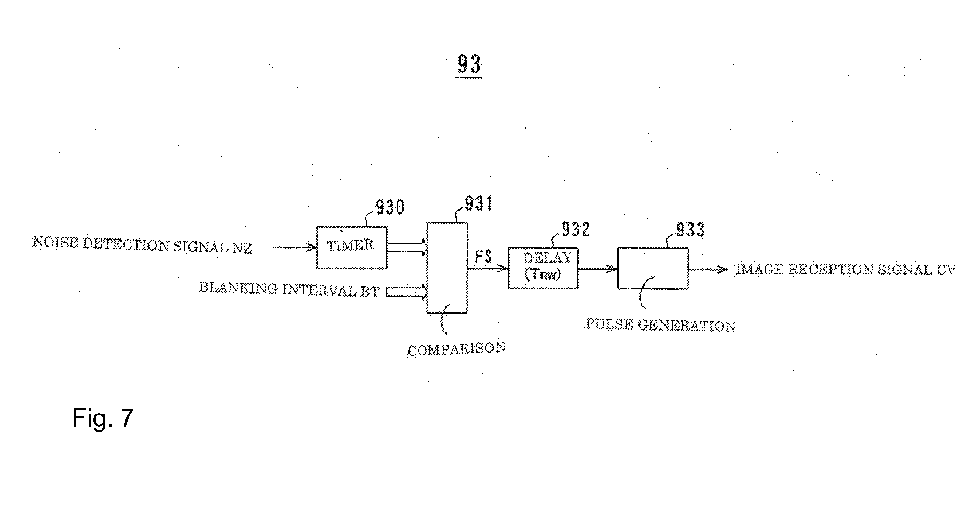

FIG. 7 is a diagram showing an example of the internal configuration of the frame synchronization detection circuit 93.

In FIG. 7, a timer 930 starts from an initial value 0 and counts the number of pulses of a clock signal (not shown) having a predetermined frequency. An elapsed-time signal for indicating the elapsed time that corresponds to the counted value is fed to a comparator 931. The comparator 931 generates a frame synchronization signal FS having a logical level 1 in the manner shown in FIG. 3 when the time indicated by the elapsed-time signal is the same as the blanking interval BT, as shown in FIG. 3, and the signal is sent to a delay circuit 932. The delay circuit 932 delays the frame synchronization signal FS by a time T_{RW} used in the reset stage R and the addressing stage W of the subfield SF0 in the manner shown in Fig. 3, and sends the signal to a pulse generator 933. In accordance with the frame synchronization signal supplied by the delay circuit 932, the pulse generator 933 generates an image reception signal CV having a logical level 1 in the manner shown in FIG. 3 during the time spent on the sustaining stage I of the subfield SF0, and feeds the signal to the image sensor 91.

Here, the image sensor 91 shown in FIG. 6 receives the display light supplied from the object lens 90 only during the interval in which the image reception signal CV having the logical level 1 is fed in the manner shown in FIG. 3, and an image signal that corresponds to the display light is fed to an image processing circuit 94 as a captured image signal SG. In other words, the image sensor 91 supplies an image processing circuit 94 with a captured image signal SG that expresses an on- and off-pattern displayed by the execution of the two-dimensional code display drive stage (subfield SF0), i.e., an on- and off-pattern that corresponds to a two-dimensional information code for indicating the coordinate position of the pixel blocks PB. A writing pressure sensor 95 provided to the distal end of the electronic chalk 9 generates a drawing execution signal for indicating that the blackboard surface is currently being drawn on during the interval in which the distal end of the writing pressure sensor is pressed against the screen of the PDP 100, and feeds the signal to the image processing circuit 94. The image processing circuit 94 receives the captured image signal SG supplied from the image sensor 91 as long as the image execution signal is being supplied, and feeds the signal to a coordinate information extraction circuit 96. The image processing circuit 94 determines that external light is strong when the brightness level indicated by the captured image signal SG is biased toward a brightness level above a predetermined brightness, and an offset signal for suppressing the brightness level is fed to the image sensor 91. In this case, the image sensor 91 adjusts the contrast of the captured image signal SG in accordance with the offset signal. Coordinate data that indicates the coordinate position on the screen of the PDP 100 of each pixel block PB, and two-dimensional code in which the coordinate data has been converted to two-dimensional code in pixel block PB units, are correlated and stored in advance, as shown in FIG. 2. The coordinate information extraction circuit 96 first generates a two-dimensional code that corresponds to the on- and off-pattern inside the pixel blocks PB in pixel block PB units in the manner shown in FIG. 2 on the basis of the captured image signal supplied by the image processing circuit 94. The coordinate information extraction circuit 96 reads from a coordinate two-dimensional code memory 97 the coordinate data that matches the two-dimensional code and corresponds to the two-dimensional code, and feeds the coordinate data to a wireless transmission circuit 98 as coordinate data ZD. The wireless transmission circuit 98 modulates the coordinate data ZD and wirelessly transmits the result.

In other words, the electronic chalk 9 extracts from the captured image signal obtained by capturing the image on the screen of the PDP 100 the two-dimensional code (for indicating coordinate data) displayed during the execution interval of the sustaining stage I of the subfield SF0 in the manner shown in FIG. 3, and the coordinate position information (ZD) shown by the two-dimensional code is wirelessly transmitted. The electronic chalk 9 shown in FIG. 6 is designed so that light emitted by the pixel cells P_{R}, P_{G}, and P_{B} is captured as an image by the image sensor 91. Since infrared light is emitted during the light emission of the pixel cells, the image sensor 91 is preferably one that can sense visible light through infrared light.

The receiving circuit 10 shown in FIG. 1 receives a transmission wave from the electronic chalk 9, restores the coordinate data ZD by demodulating the transmission wave, and feeds the result to a trace image data generator 11. The trace image data generator 11 generates image data that expresses straight lines or curved lines, which sequentially trace each of the coordinate positions shown by the coordinate data ZD sequentially supplied from the receiving circuit 10, and feeds the data to the image overlay circuit 2 as trace image data signal D_{TR}. Driving that follows the primary image display drive stage composed of subfields SF1 to SF8 is thereby carried out in the manner shown in FIG. 3 in accordance with the pixel data PD obtained by superimposing the trace image data signal D_{TR} onto the blackboard surface image data D_{BB}. In this case, the distal end of the electronic chalk 9 is moved while kept in contact with the screen of the PDP 100, whereupon a straight-line or curved-line image along the movement trajectory is superimposed and displayed on the blackboard surface image shown by the blackboard surface image data D_{BB}, as shown in FIG. 5(b).

In this manner, in the electronic blackboard shown in FIG. 1, intermediate gradations of brightness are displayed by using subfields (SF1 to SF8) for displaying a blackboard image and a subfield (SFO) used to display a two-dimensional code for expressing a two-dimensional code that indicates the coordinate position on the screen. In this case, the light emission interval assigned to a subfield used to display a two-dimensional code is sufficiently short that the on- and off-pattern cannot be visually perceived. Therefore, in actuality, only the blackboard images shown in FIGS. 5(a) and 5(b) are visually perceived on the screen of the PDP 100. The two-dimensional code displayed (not visible) by the subfield (SFO) used to display two-dimensional code is captured and read by the electronic chalk 9, whereby a trace image signal that corresponds to the coordinate position thus read is generated, and the signal is superimposed and displayed on the blackboard surface.

Therefore, in accordance with the electronic blackboard shown in FIG. 1, each coordinate position can be read when the screen is traced using an electronic chalk without requiring the use of a touch panel or the like for detecting a coordinate position on a display screen.

In the primary image display drive stage shown in FIG. 3, driving (shown in FIG. 4) designed to express an intermediate brightness proportional to nine gradations in the eight subfields SF1 to SF8 is performed by causing the pixel cells P to emit light in the subfields that continue from the headmost subfield SF1, but no limitation is imposed by this driving method.

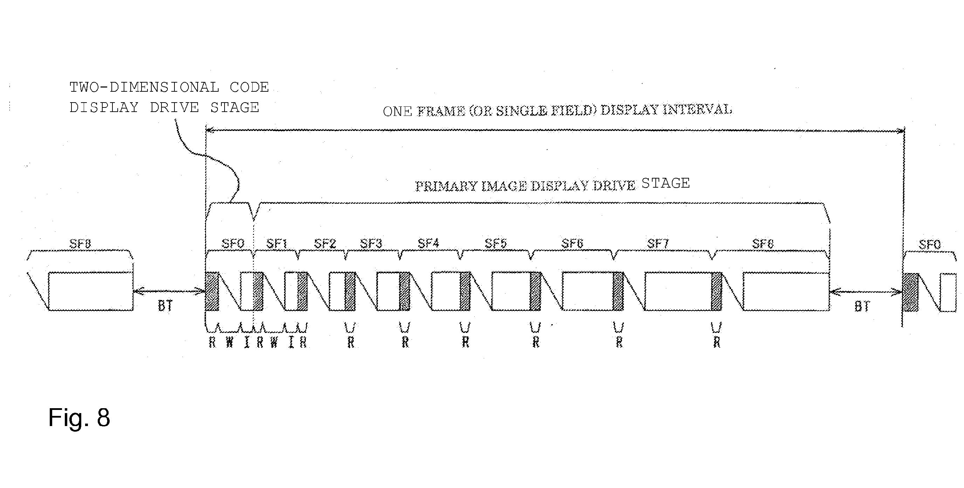

FIG. 8 is a diagram showing an example of the light emission drive sequence adopted for the case in which intermediate brightness proportional to 2⁸ gradations is expressed using the eight subfields SF1 to SF8 in the primary image display drive stage.

In FIG. 8, the drive controller 4 sequentially executes the reset stage R, the addressing stage W, and the sustaining stage I in the same manner as FIG. 3 in the two-dimensional code display drive stage carried out using subfield SF0. The drive controller 4 also sequentially executes the reset stage R, the addressing stage W, and the sustaining stage I in the subfields SF1 to SF8 in the primary image display drive stage. The operation of the reset stage R, the addressing stage W, and the sustaining stage I is the same as the operation shown in FIG. 3.

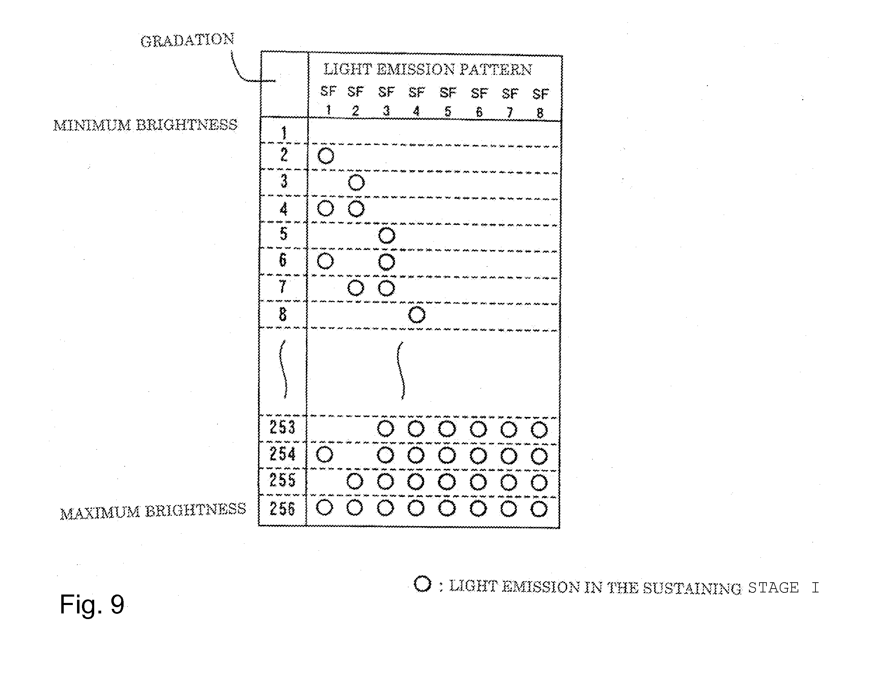

In accordance with the light emission drive sequence shown in FIG. 8, driving based on 2⁸ light emission patterns as shown in FIG. 9 is carried out in accordance with the pixel drive data GC1 to GC8 based on the pixel data PD in the primary image display drive stage (subfields SF1 to SF8). In this case, an intermediate brightness that corresponds to the total light emission interval in the display interval of one frame (or one field) is expressed for each light emission pattern. In other words, in accordance with the light emission drive sequence shown in FIG. 8, an intermediate brightness proportional to 256 gradations is expressed in the primary image display drive stage.

A subfield SF0 used exclusively to display a two-dimensional pattern based on the coordinate data is provided in the embodiment described above, but it is also possible to display a two-dimensional pattern that is based on the coordinate data in the subfield SF1, which is the subfield with the shortest light emission interval from among the subfields SF1 to SF8. In this case, GD2 to GD8 among the pixel drive data GD1 to GD8 generated in the SF pixel drive data generator 3 are assigned to the subfields SF2 to SF8, and the pixel drive data GD0 generated in the two-dimensional code converter 7 is assigned to the subfield SF1.

In the embodiment described above, each pixel cell P is made to emit light in accordance with the pixel drive data GD0 based on the coordinate data in the two-dimensional code display drive stage (subfield SF0) shown in FIGS. 3 to 8, but it is not a requirement in this case that all of the pixel cells P be made to emit light.

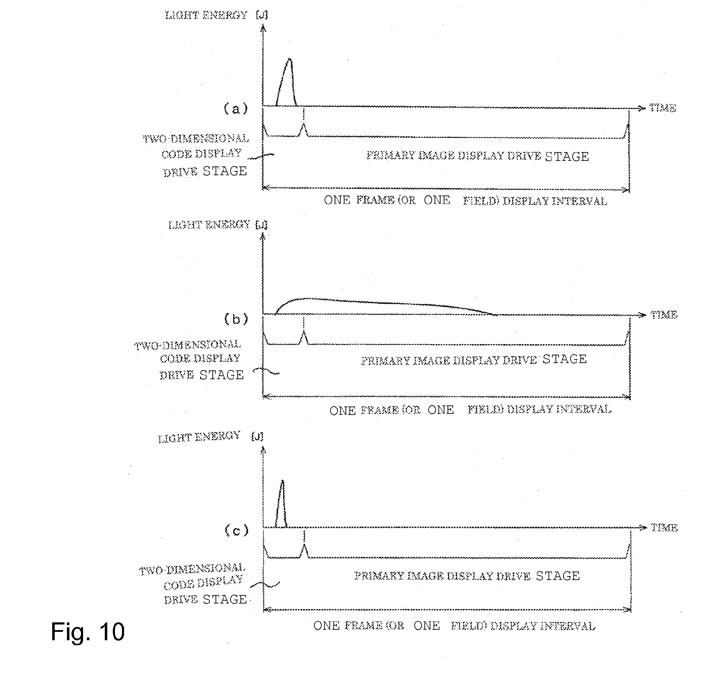

For example, among the three types of pixel cells (P_{R}, P_{G}, and P_{B}), the blue pixel cells P_{B} have the least contribution to the total brightness. In view of this situation, only the blue pixel cells P_{B} among the three types of pixel cells (P_{R}, P_{G}, and P_{B}) are driven so as to emit light that corresponds to the pixel drive data GD0 in the subfield SF0 for supporting the two-dimensional code display drive stage. In other words, all of the pixel cells P_{R} and P_{G} are fixedly set in the off-mode regardless of the content of pixel drive data GD0 in the addressing stage W of the pixel drive data GD0. This makes it possible to reduce the degradation in image quality that accompanies the display of the two-dimensional code. The afterglow during light emission by the blue pixel cells P_{B} in the manner shown in FIG. 10(a) is shorter than that of the other colors of the pixel cells P, as shown in FIG. 10(b), and high brightness can be obtained in a short interval. The level of infrared light emitted during discharge of the pixel cells P reaches a peak in a short period of time and immediately converges in the manner shown in FIG. 10(c). This allows the frame synchronization detection circuit 93 of the electronic chalk 9 to perform extraction with good precision. Light emission of all colors, i.e., red, blue, and green colors, referred to as reset light emission is carried out in the reset stage R in the subfield SF0. A specific wavelength cutting optical filter 89 (which may be a filter for transmitting only the wavelengths of infrared and blue light) for cutting red and green colors in the optical pathway between the object lens 90 and the image sensor 91 of the electronic chalk 9 is provided in order to avoid the adverse effect of afterglow of reset light emission and to improve extraction precision for blue color alone.

A correction may be made in order to reduce the blue color component in the pixel data PD in the case that the blackboard surface image is excessively blue in the manner shown in FIGS. 5(a) and 5(b) after only the blue pixel cells P_{B} have been made to emit light in the two-dimensional code display drive stage (subfield SF0) in the manner described above.

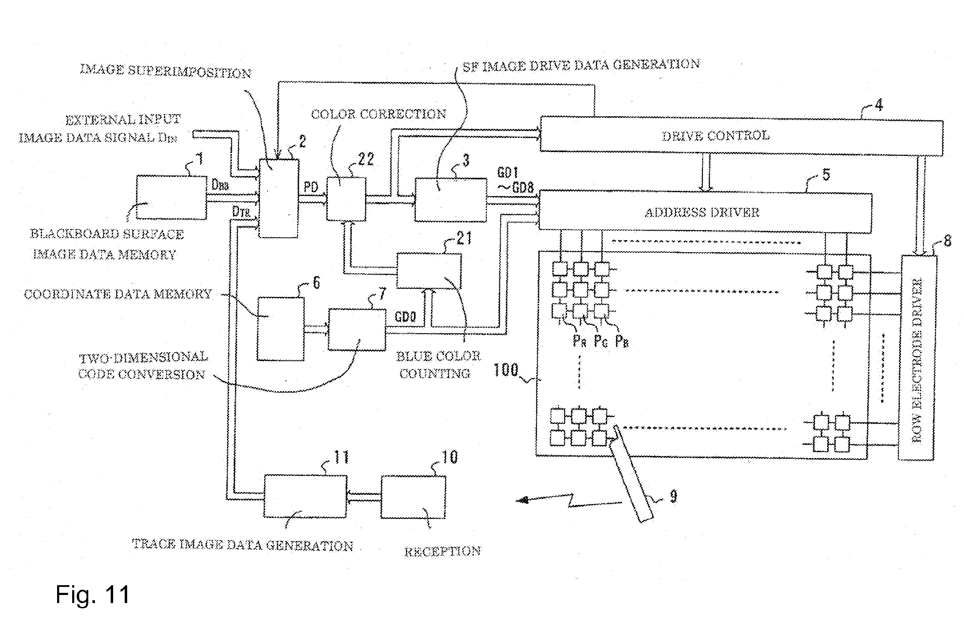

FIG. 11 is a diagram showing an improved example of the electronic blackboard implemented in view of the above.

Other than a blue counting circuit 21 and a color correction circuit 22, the configuration of the electronic blackboard shown in FIG. 11 is the same as that shown in FIG. 1. Accordingly, only the operation of the blue counting circuit 21 and the color correction circuit 22 will be described.

The blue counting circuit 21 counts the total number of pixel cells P_{B} set in the on-mode in one screen on the basis of the pixel drive data GD0, and a blue color reduction signal indicating the amount of blue color reduction that corresponds to the total number thus counted is fed to the color correction circuit 22. The color correction circuit 22 supplies both the SF pixel drive data generator 3 and the drive controller 4a with a brightness level indicated by the pixel data PD, which corresponds to the blue color component among the pixel data PD supplied from the image overlay circuit 2, and with a brightness level reduced by an amount commensurate with the blue color reduction amount indicated by the blue color reduction signal. The color correction circuit 22 directly supplies both the SF pixel drive data generator 3 and the drive controller 4 with the same for the pixel data PD that corresponds to the red and green components directly.

Therefore, in accordance with the blue counting circuit 21 and the color correction circuit 22, the blue component of the entire blackboard surface image is reduced and a degradation of the image quality is suppressed by an amount commensurate with the quantity of blue produced in the two-dimensional code display that corresponds to the coordinate data.

### Embodiment 2

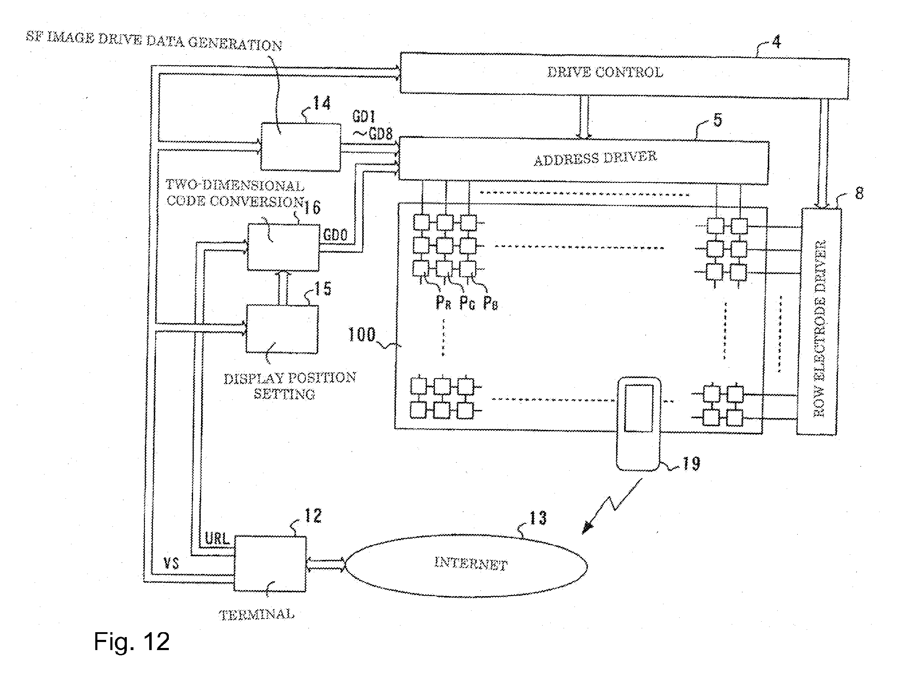

FIG. 12 is a diagram showing the configuration of an information delivery system in which the present embodiment is adopted so that a two-dimensional code for representing a URL (Uniform Resource Locator) related to various images supplied via the Internet is displayed (invisibly) on the screen while the images are also displayed.

In FIG. 12, a terminal device 12 first receives various information data from the Internet 13 by accessing the Internet 13. Next, the terminal device 12 supplies an image signal to an SF pixel drive data generator 14, a display position setting circuit 15, and a drive controller 4. The signal is supplied as an image signal VS that corresponds to various image contents contained in the information data. Furthermore, the terminal device 12 supplies a two-dimensional code converter 16 with a URL contained in the information data, i.e., a URL signal for indicating the URL related to the image contents.

The SF pixel drive data generator 14 generates pixel drive data GD1 to GD8 designed to set pixel cells P to an on-mode or off-mode state in subfields SF1 to SF8 in the manner shown in FIGS. 3 to 8 in accordance with the brightness level indicated by the image signal VS, and supplies the data to an address driver 5.

The display position setting circuit 15 supplies the two-dimensional code converter 16 with display position information that indicates the position of the area of the screen on which the image contents are displayed based on the image signal VS.

The two-dimensional code converter 16 first converts the URL of each of the image contents to a two-dimensional code having (n × m) bits on the basis of the URL signal. Next, the two-dimensional code converter 16 correlates each bit of the two-dimensional code with (n × m) pixel cells P in each of the pixel blocks PB (shown in FIG. 2) belonging to the area indicated by the display position information. The two-dimensional code converter 16 supplies, as image drive data GD0 corresponding to the pixel cells P, the bits correlated with the pixel cells P to the address driver 5.

The PDP 100 as a plasma display panel is provided with a transparent front surface substrate (not shown), and a back surface substrate (not shown). A discharge space in which a discharge gas is sealed is present between the front surface substrate and the back surface substrate. A plurality of row electrodes extending in the horizontal direction (lateral direction) of each of the display surfaces is formed on the front surface substrate. A plurality of column electrodes extending in the vertical direction (perpendicular direction) of the display surfaces is formed on the back surface substrate. Pixel cells P are formed in the intersection portions (including the discharge spaces) between the row electrodes and the column electrodes.

The drive controller 4 sequentially executes a two-dimensional code display drive stage and a primary image display drive stage in the display interval of one frame (or one field) on the basis of the light emission drive sequence in the manner shown in FIG. 3 or 8 based on the subfield method. At this point, the drive controller 4 sequentially executes an addressing stage W and a sustaining stage I in the primary image display drive stage in the eight subfields SF1 to SF8 shown in FIG. 3 or 8. The drive controller 4 executes a reset stage R before the addressing stage W in the subfields SF1 to SF8 when driving is carried out in accordance with the light emission drive sequence shown in FIG. 8. The drive controller 4 executes the reset stage R prior to the addressing stage W solely for the subfield SF1 when driving is carried out in accordance with the light emission drive sequence shown in FIG. 3. In the two-dimensional code display drive stage, the drive controller 4 sequentially executes the reset stage R, the addressing stage W, and the sustaining stage I in the subfield SF0 in the manner shown in FIG. 3 or 8.

The drive controller 4 generates various control signals that are used to drive the PDP 100 in the manner described below by executing the reset stage R, the addressing stage W, the sustaining stage I; and supplies the signals to the address driver 5 and the row electrode driver 8.

At this point, the row electrode driver 8 applies a reset pulse to all the row electrodes of the PDP 100 in order to initialize the state of all the pixel cells P of the PDP 100 to an on-mode state in accordance with the execution of the reset stage R.

Next, in accordance with the addressing stage W, the address driver 5 generates a pixel data pulse whose voltage corresponds to the pixel drive data GD according to the subfield SF to which the addressing stage W belongs. In other words, the address driver 5, for example, generates a pixel data pulse that corresponds to the pixel drive data GD1 in the addressing stage W of the subfield SF1, and generates a pixel data pulse that corresponds to the pixel drive data GD2 in the addressing stage W of the subfield SF2. At this point, the address driver 5 generates a high-voltage pixel data pulse when pixel drive data GD for indicating that the pixel cell P is to be set to an on-mode state has been supplied, and generates a low-voltage pixel data pulse when pixel drive data GD for indicating that the pixel cell P is to be set to an off-mode state has been supplied.

In this interval, the row electrode driver 8 sequentially applies a scan pulse to each of the row electrodes of the PDP 100 in synchronization with the application timing of the pixel data pulse groups are applied in increments of one display line. This operation sets each of the pixel cells P for one display line that belongs to the row electrode to which the scan pulse has been applied to a state (on-mode or off-mode) that corresponds to the pixel data pulse.

Next, in accordance with the execution of the sustaining stage I, the row electrode driver 8 applies a sustain pulse to all of the row electrodes of the PDP 100 in order to repeatedly cause only the pixel cells P in the on-mode state to discharge and emit light during the light emission interval assigned to the subfield SF to which the sustaining stage I belongs. In the embodiment shown in FIG. 3, the shortest light emission interval is assigned to the subfield SF0.

Here, executing the primary image display drive stage (subfields SF1 to SF8) causes light to be emitted from the pixel cells P in the sustaining stage I for each of the subfields SF (indicated by white circles) that continue from the subfield SF1 in the manner shown in FIG. 4 in accordance with the pixel drive data GD1 to GD8 based on the image signal VS. In other words, light is emitted from the pixel cells P by any one of the nine light emission patterns shown in FIG. 4 in accordance with the brightness level indicated by the image signal VS. At this point, an intermediate brightness that corresponds to the total light emission interval in one frame display interval is visually perceived. In other words, a so-called intermediate brightness proportional to nine gradations, in which the brightness level indicated by the image signal VS is represented by nine steps, is expressed by the nine light emission patterns shown in FIG. 4.

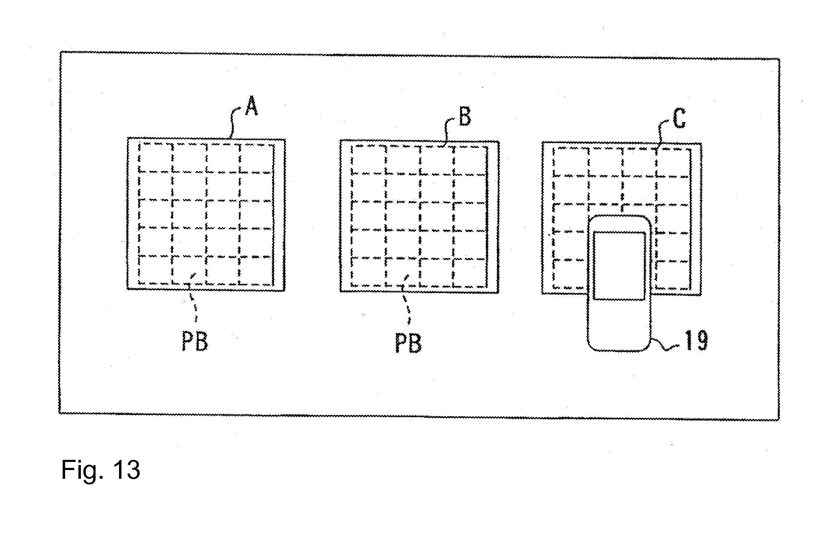

Therefore, image A, image B, and image C will each be displayed on the screen of the PDP 100 as shown in FIG. 13 when image signals VS that corresponds to the three images A to C are supplied from the terminal device 12, for example.

On the other hand, executing the two-dimensional code display drive stage (subfield SF0) causes light to be emitted from each of the pixel cells P in the sustaining stage I of the subfield SF0 in accordance with the pixel drive data GD0 based on the URL signal. In other words, on- and off-patterns based on the two-dimensional code for representing the URL related to each of the images A to C supplied from the terminal device 12 are displayed in units of pixel blocks PB (area surrounded by the broken line) in the area that corresponds to the image, as shown in FIG. 13. The light emission interval implemented in the sustaining stage I of the subfield SF0 as described above is set to be short so that the on- and off-patterns based on the two-dimensional code cannot be visually perceived. Accordingly, the images A to C are, in actuality, visually perceived on the screen of the PDP 100.

When a shutter button mounted on a camera of a mobile phone 19 having a camera shown in FIG. 12 is pressed in the URL read mode, the shutter opens only during the interval in which the sustaining stage I of the subfield SF0 shown in FIG. 3 or 8 is executed. Therefore, when the image C is captured by the mobile phone 19 having a camera in the manner shown in FIG. 13, for example, the on- and off-patterns based on the two-dimensional code that represents the URL related to the image C are captured. At this time, the mobile phone 19 having a camera restores the URL information on the basis of the on- and off-patterns that are based on the two-dimensional code thus captured, and the Internet 13 is accessed using the URL. Information related to the image C is thereby acquired by the mobile phone 19 having a camera.

A plasma display panel (PDP 100) is used as a display device in the electronic blackboard shown in embodiment 1 or in the information delivery system shown in embodiment 2, but no limitation is imposed thereby. In other words, any display can be adopted as long as the display is one in which displaying and driving are carried out using a plurality of subfields that execute an addressing stage for setting each of the pixel cells to an on-mode or an off-mode on the basis of an input image signal, and a sustaining stage for causing only the pixel cells set to the on-mode to emit light during a pre-assigned light emission interval.

In embodiments 1 and 2, the display (PDP 100) is made to display and is driven by using nine subfields SF0 to SF9 within a unit display interval proportional to one frame (or one field), but the number of subfields is not limited to nine.

In other words, one subfield among N (where N is an integer of 2 or higher) of subfields for each unit display interval may be used as a subfield for displaying an information code such as a two-dimensional code, and each of the other subfields may be a subfield for displaying the primary image. An information code such as a two-dimensional code can thereby be superimposed and displayed in an invisible state in the primary image that corresponds to an input image signal. It is therefore possible to implement an electronic blackboard such as that in embodiment 1 and an information delivery system such as that in embodiment 2.

### INDUSTRIAL APPLICABILITY

An entire primary image can be displayed without reduction while an information code is provided. This is because the information code can be superimposed and displayed as a two-dimensional code in an invisible state in the primary image that corresponds to an input image signal.

## Claims

1. A method for displaying on a display an information code together with an image based on a primary image signal, the method comprising:
executing an addressing stage for setting each pixel cell of said display to one mode from among an on-mode and an off-mode in each of N (where N is an integer of 2 or higher) subfields for each unit display interval, and a sustaining stage for causing only the pixel cells set to said on-mode to emit light during a light emission interval assigned to said subfield;
setting each of said pixel cells to one mode from among said on-mode and said off-mode in accordance with said information code in said addressing stage of one subfield among said N subfields; and
setting each of said pixel cells to one mode from among said on-mode and to said-off-mode in accordance with said primary image signal in said addressing stage of each of the subfields except for said one subfield among said N subfields.

2. The method for displaying an information code of claim 1, wherein the shortest interval is used as said light emission interval assigned to said one subfield among said light emission intervals assigned to each of said N subfields.

3. The method for displaying an information code of claim 1, wherein, in said addressing stage of said one subfield, the pixel cells are set to one of said on-mode and said off-mode in accordance with said information code using only blue pixel cells for emitting blue light among said pixel cells, and all of said pixel cells for emitting a color of light other than blue are set to said off-mode.

4. The method for displaying an information code of claim 3, wherein a blue component in said primary image signal is reduced in comparison with the total number of said blue pixel cells set in said on-mode.

5. A display device for displaying on a display an information code together with an image based on a primary image signal, the device comprising:
address means for setting each pixel cell of said display to one mode from among an on-mode and an off-mode in each of N (where N is an integer of 2 or higher) subfields for each unit display interval; and
sustain means for causing only said pixel cells set to said on-mode in each of said N subfields to emit light during a light emission interval assigned to said subfield; wherein
said address means sets each of said pixel cells to one mode from among said on-mode and said off-mode in accordance with said information code in one subfield among said N subfields, and sets each of said pixel cells to one mode from among said on-mode and said-off-mode in accordance with said primary image signal in each of the subfields except for said one subfield among said N subfields.

6. The display device of claim 5, wherein the shortest interval is used as said light emission interval assigned to said one subfield among said light emission intervals assigned to each of said N subfields.

7. The display device of claim 5, wherein, in said one subfield, said address means sets the pixel cells to one of said on-mode and said off-mode in accordance with said information code using only blue pixel cells for emitting blue light among said pixel cells, and all of said pixel cells for emitting a color of light other than blue are set to said off-mode.

8. The display device of claim 7, further comprising:
blue color multiplication means for totaling the total number of said blue pixel cells set to said on-mode; and
color correction means for reducing the blue component in said primary image signal in accordance with said total number.

9. The display device of claim 6, wherein a blanking interval is provided immediately prior to said one subfield.
